# EUROPÄISCHE PATENTSCHRIFT

(11) **EP 3 199 824 B1**
(45) Veröffentlichungstag und Bekanntmachung des Hinweises auf die Patenterteilung: **26.08.2020**
(21) Anmeldenummer: 17153167.6
(22) Anmeldetag: 26.01.2017
(51) Int. Cl.: F16B 25/00, F16B 39/30

(54) **BEFESTIGUNGSANORDNUNG UND VERWENDUNG EINER BEFESTIGUNGSANORDNUNG**
FASTENING ARRANGEMENT AND USE OF A FASTENING ARRANGEMENT
SYSTÈME DE FIXATION ET SON UTILISATION

(30) Priorität: 28.01.2016 DE 102016101519
(43) Veröffentlichungstag der Anmeldung: 02.08.2017
(73) Patentinhaber: SFS Intec Holding AG, 9435 Heerbrugg (CH)
(72) Erfinder: Mair, Roland, 6840 Götzis (AT); Comoth, Marc, 26290 Donzere (FR)

(56) Entgegenhaltungen:
- DE-A1-102011 008 167
- US-A- 3 351 115
- US-A- 4 749 319
- US-A- 5 779 417
- US-A1- 2004 141 827
- US-A1- 2007 128 001
- US-A1- 2015 204 370

## Beschreibung

Die Erfindung betrifft eine Befestigungsanordnung mit einer Schraube, wobei die Schraube einen Kopf, einen Schaft und ein Gewinde aufweist, wobei das Gewinde zumindest zwei unterschiedliche Gewindeabschnitte aufweist, wobei ein Außendurchmesser D_{Gn} eines kopfnahen Gewindeabschnittes kleiner als ein Außendurchmesser D_{Gf} eines kopffernen Gewindeabschnittes und größer als ein Außendurchmesser D_{Sf} des Schaftes im Bereich des kopffernen Gewindeabschnittes ist. Ferner betrifft die Erfindung eine Verwendung der Befestigungsanordnung.

Eine Befestigungsanordnung mit einer Schraube ist aus der EP 0 944 772 B1 bekannt. Die Besonderheit dieser Schraube liegt darin, dass, anschließend an einen gewindefreien Schaftabschnitt zwischen einem Schraubenkopf und einem Gewinde, für das Gewinde ein besonderer Verlauf vorgesehen ist. Dieser besteht darin, dass der dem gewindefreien Schaftabschnitt zugewandte Endbereich des Gewindes spitzwinklig zur Schraubenachse ausläuft. Hierdurch wird es ermöglicht, zwei Bauteile miteinander zu verbinden, wobei die Schraube am Ende des Einschraubvorganges überdreht wird. Somit wird das Gewinde in dem Bauteil, in welchem das Gewindeende liegt, zerstört, wodurch eine Rückdrehsicherung der Schraube zur Verfügung gestellt wird. Letzteres kann zwar prinzipiell auch dadurch erreicht werden, dass von vornherein eine Schraube verwendet wird, deren gewindefreier kopfnaher Schaftabschnitt in seiner Länge auf die Dicke der Bauteile abgestimmt ist. Mit der Schraube der EP 0 944 772 B1 ist es jedoch möglich, Bauteilpakete verschiedener Dicke miteinander zu verbinden, da es nicht darauf ankommt, an welcher Stelle innerhalb des kopffernen Bauteils das Gewindeende liegt.

Die somit bekannte Schraube ist für zahlreiche Anwendungen geeignet, nämlich immer dann, wenn die Länge des gewindefreien Schaftabschnittes hinreichend auf den Abstand des kopffernen Bauteils vom Schraubenkopf abgestimmt ist. Es kommt zwar nicht wesentlich darauf an, an welcher Stelle innerhalb des kopffernen Bauteils das Ende des Gewindes liegt. Allerdings sollte in dem Moment, in dem die Schraube überdreht, das Ende des Gewindes irgendwo in dem kopffernen Bauteil angeordnet sein, denn nur so kann das Gewindeende die erforderliche Gegenkraft zur Haltekraft des Kopfes aufbringen, um letztlich die Bauteile sicher zusammen zu halten. Letztlich bietet die Lösung des Standes der Technik daher einen vergrößerten Einsatzbereich ein und derselben Schraube. Dieser ist jedoch nach wie vor durch das geschilderte Erfordernis begrenzt, wonach das Gewindeende im kopffernen Bauteil zu liegen kommen muss. Ob letzteres gelingt, hängt von der Länge des gewindefreien Schaftabschnittes ab.

Die DE 10 2011 008 167 A1 offenbart eine Schraube, die ein Teilgewinde aufweist. Im Anschluss an das Teilgewinde sind Prägungen vorgesehen, die insbesondere als Gewindewindungen mit einem Außendurchmesser realisiert sein können, der geringer ist, als der Außendurchmesser des eigentlichen Gewindes. In einer fertigen Befestigungsanordnung befindet sich das eigentliche Gewinde der Teilgewindeschraube innerhalb einer Unterkonstruktion.

Aus der DE 10 2009 005 916 A1 ist eine Schraube bekannt, die zwei durch einen gewindefreien Abschnitt voneinander getrennte Gewindeabschnitte aufweist. Wird diese Schraube verwendet, um ein Holzelement an einer aus Porenbeton bestehenden Unterlage zu befestigen, so stehen beide Gewindeabschnitte in festem Eingriff mit den Bauteilen.

Auch in der US 3,248,747 A ist eine Schraube mit zwei Gewindeabschnitten offenbart. Im
Die US 3,351,115 A befasst sich ebenfalls mit einer Schraube, die unterschiedliche Gewindeabschnitte aufweist, nämlich insbesondere einen kopfnahen Gewindeabschnitt und einen kopffernen Gewindeabschnitt. Für die Befestigungsanordnung, in der die Schraube gemäß US 3,351,115 A zum Einsatz kommt, ist wesentlich, dass der kopfferne Gewindeabschnitt innerhalb des kopffernen Elementes der miteinander zu befestigenden Elemente liegt und auf diese Weise eine Haltekraft aufbringt.

Es ist eine Aufgabe der Erfindung eine Befestigungsanordnung und eine Verwendung einer Schraube anzugeben, wodurch der Einsatzbereich der Schraube nochmals gegenüber dem Stand der Technik vergrößert wird und wodurch verschiedene Verwendungsarten der Schraube möglich sind.

Diese Aufgabe wird mit den Merkmalen des unabhängigen Anspruchs gelöst. Vorteilhafte Ausführungsformen der Erfindung sind in den abhängigen Ansprüchen angegeben.

Die Erfindung betrifft eine Befestigungsanordnung mit einer Schraube, wobei die Schraube einen Kopf, einen Schaft und ein Gewinde aufweist, wobei das Gewinde zumindest zwei unterschiedliche Gewindeabschnitte aufweist, wobei ein Außendurchmesser D_{Gn} eines kopfnahen Gewindeabschnittes kleiner als ein Außendurchmesser D_{Gf} eines kopffernen Gewindeabschnittes und größer als ein Außendurchmesser D_{Sf} des Schaftes im Bereich des kopffernen Gewindeabschnittes ist, wobei sich das Gewinde bis zu einer Unterseite des Kopfes erstreckt und wobei mindestens ein flaches kopfnahes Element und ein flaches kopffernes Element vorgesehen sind, die mittels der Schraube verbunden sind, wobei der kopfnahe Gewindeabschnitt in das kopfferne Element eindringt, wobei der kopfferne Gewindeabschnitt in einem fertigen Zustand der Befestigungsanordnung außerhalb des flachen kopffernen Elementes angeordnet ist. Die Schraube hat also keinen gewindefreien kopfnahen Schaftabschnitt mehr. Selbstverständlich kann das Gewindeende einen gewissen Abstand zum Kopf aufweisen; die Formulierung, dass kein gewindefreier Schaftabschnitt vorliegt beziehungsweise, dass sich das Gewinde bis zur Unterseite des Kopfes erstreckt, soll also lediglich bedeuten, dass kein gewindefreier Schaftabschnitt von erheblicher Erstreckung vorliegt. Wenn beispielsweise das Gewindeende einen Abstand vom Kopf der Schraube aufweist, der geringer ist als eine Gewindesteigung, so kann noch immer davon die Rede sein, dass sich das Gewinde bis zur Unterseite des Kopfes erstreckt. Im Zusammenhang mit der Erfindung kommt es lediglich darauf an, dass es keinen ausgeprägten gewindefreien Abschnitt in der Nachbarschaft zum Schraubenkopf mehr gibt, dessen Länge eine bis zu mehreren Gewindesteigungen beträgt. Wird diese Schraube zur Befestigung von zwei Bauteilen miteinander in geeigneter Weise verwendet, so steht der kopfnahe Gewindeabschnitt mit einem kopffernen Bauteil in dem Moment in Eingriff, in dem der Kopf an einem kopfnahen Bauteil anschlägt, jedenfalls dann, wenn die Länge des kopfnahen Gewindeabschnittes dies im Vergleich zur Dicke des kopfnahen Bauteils zulässt. Nun gibt es zwei verschiedene Möglichkeiten, wie der Befestigungsvorgang der Bauteile aneinander beendet werden kann. Entweder der Eindrehvorgang der Schraube wird in dem Moment beendet, in dem der Schraubenkopf anschlägt. Hierzu kann beispielsweise ein Drehmomentwerkzeug entsprechend eingestellt werden. Die erfindungsgemäße Möglichkeit besteht darin, die Schraube zu überdrehen. In diesem Fall wirkt der kopfnahe Gewindeabschnitt wie ein Fräser in dem kopffernen Bauteil, so dass nicht nur eine sichere Verbindung der beiden Bauteile aneinander geschaffen wird, sondern gleichzeitig eine Rückdrehsicherung entsteht. Durch das Überdrehen der Schraube wird nämlich das Gewinde in dem kopffernen Bauteil zerstört, so dass beim Rückdrehen der Schraube kein Eindringen des Schraubengewindes in das kopfferne Bauteil mehr auftreten kann. Da sich das Gewinde der Schraube bis zu einer Unterseite des Kopfes erstreckt, können praktisch beliebig dünne kopfnahe Bauteile an kopffernen Bauteilen befestigt werden. Wählt man die Länge des kopfnahen Gewindeabschnittes hinreichend lang, so können auch dicke kopfnahe Elemente Teil der Befestigungsanordnung werden, ohne dass auf die Vorteile der Erfindung verzichtet werden müsste. Es ist bevorzugt, dass der kopfnahe Gewindeabschnitt eine Länge von 2 bis 4 Gewindesteigungen hat.

Nützlicherweise ist vorgesehen, dass der kopfnahe Gewindeabschnitt und der kopfferne Gewindeabschnitt dieselbe Steigung aufweisen. Diese Eigenschaft der Schraube ist keineswegs zwingend um alle oder einige der Vorteile der vorliegenden Erfindung zu genießen. Allerdings handelt es sich bei der Ausführung mit konstanter Steigung um eine sehr vernünftige Lösung, da dies die Herstellung der Schraube vereinfacht. Es kann schlicht eine herkömmliche Schraube hergestellt werden, bei der sich das Gewinde bis zur Unterseite des Kopfes erstreckt, wobei dann in einem weiteren Fertigungsschritt eine Zylinderverformung des kopfnahen Gewindeabschnittes vorgenommen wird.

Es kann vorgesehen sein, dass der Außendurchmesser D_{Gf} des kopffernen Gewindeabschnittes über eine gewisse Gewindestrecke kontinuierlich in den Außendurchmesser D_{Gn} des kopfnahen Gewindeabschnittes übergeht.

In anderer Variante ist die Schraube so gestaltet, dass der Außendurchmesser D_{Gf} des kopffernen Gewindeabschnittes stufenförmig in den Außendurchmesser D_{Gn} des kopfnahen Gewindeabschnittes übergeht.

Die Erfindung ist besonders in dem Zusammenhang nützlich, dass die Schraube eine Bohrspitze aufweist. Es können somit vorzugsweise Bauteile miteinander verbunden werden, bei denen ein kopfnahes Bauteil eine Vorbohrung aufweist, während ein kopffernes Bauteil nicht vorgebohrt ist. Die Schraube wird dann durch die Vorbohrung des kopfnahen Bauteils hindurch an dem kopffernen Bauteil angesetzt, sie bohrt ein Loch in das kopfferne Bauteil und bringt sodann ein Gewinde in das kopfferne Bauteil über den kopffernen Gewindeabschnitt der Schraube ein. Gegen Ende des Einschraubvorgangs dringt dann der kopfnahe Gewindeabschnitt in das kopfferne Bauteil ein. Im Anschluss daran, wenn es zum Anschlagen des Kopfes an dem kopfnahen Bauteil kommt, kann entweder der Einschraubvorgang beendet werden, oder es kann zu dem beschriebenen Überdrehen und der damit zur Verfügung gestellten Rückdrehsicherung der Schraube kommen.

Nützlicherweise ist vorgesehen, dass in das kopfferne Element durch den kopffernen Gewindeabschnitt der Schraube ein Gewinde eingebracht ist.

Gemäß einer nicht erfindungsgemäßen Variante ist die Befestigungsanordnung so ausgestaltet, dass die zwei flachen Elemente unter Beteiligung des Kopfes und des kopfnahen Gewindeabschnittes zusammen gehalten werden, wobei der kopfnahe Gewindeabschnitt eine Haltekraft auf das kopfferne Element ausübt. Dieser Zustand der Befestigungsanordnung wird dadurch erreicht, dass man die Schraube nicht überdreht, sondern mit dem Eindrehvorgang dann aufhört, wenn der Schraubenkopf am kopfnahen Element oder Bauteil anschlägt.

In der erfindungsgemäßen Variante ist vorgesehen, dass die zwei flachen Elemente unter Beteiligung des Kopfes und des kopffernen Gewindeabschnittes zusammen gehalten werden, wobei der kopfnahe Gewindeabschnitt in dem kopffernen Element in einem überdrehten Zustand vorliegt.

Die Erfindung betrifft ferner eine Verwendung einer erfindungsgemäßen Befestigungsanordnung an einer Fassadenunterkonstruktion. Letztere bestehen vorzugsweise aus Aluminium für vorgehängte hinterlüftete Fassaden, wobei Wandwinkel beziehungsweise Wandkonsolen an Trageprofilen befestigt werden, die an Gebäudewänden befestigt sind. Dabei sind die Wandkonsolen im Allgemeinen mit 5,5 mm vorgebohrt, während die Tragprofile keine Vorbohrung aufweisen. Ebenfalls können Wandkonsolen oder auch Tragprofile aus anderen Materialien vorgesehen werden, beispielsweise Edelstahl. Typische Maße der Dicke von Wandwinkeln beziehungsweise Wandkonsolen liegen im Bereich zwischen 2 und 4 mm, wobei vorzugsweise solche von 2 mm Dicke verwendet werden. Aufgrund der allgemein erhältlichen Baumaterialien, die Verwendung finden, ist es nützlich, dass der kopfnahe Gewindeabschnitt eine Länge zwischen 3 und 6 mm hat, der Außendurchmesser des Gewindes sollte in diesem Bereich bei ca. 5 mm liegen, während der Außendurchmesser des kopffernen Gewindeabschnittes im Allgemeinen 5,4 mm beträgt.

Zur Herstellung der Schraube wird zunächst eine Schraube gefertigt wird, deren kopfnaher Gewindeabschnitt denselben Außendurchmesser wie der kopfferne Gewindeabschnitt aufweist. Danach wird die Schraube durch Umformen des kopfnahen Gewindeabschnittes und hierdurch bewirkte Verringerung des Außendurchmessers fertiggestellt.

Die Erfindung wird nun mit Bezug auf die begleitenden Zeichnungen anhand besonders bevorzugter Ausführungsformen beispielhaft erläutert.
- Figur 1: zeigt eine Schraube für eine erfindungsgemäße Befestigungsanordnung;
- Figur 2: zeigt die Schraube gemäß Figur 1 zum Zwecke der Definition von Durchmessern;
- Figur 3: zeigt eine nicht erfindungsgemäße Befestigungsanordnung;
- Figur 4: zeigt eine nicht erfindungsgemäße Befestigungsanordnung ;

- Figur 5: zeigt eine Einzelheit aus Figur 4;
- Figur 6: zeigt eine erfindungsgemäße Befestigungsanordnung;

- Figur 7: zeigt eine Einzelheit aus Figur 6.

Bei der nachfolgenden Beschreibung der Zeichnung bezeichnen gleiche Bezugszeichen gleiche oder vergleichbare Komponenten.

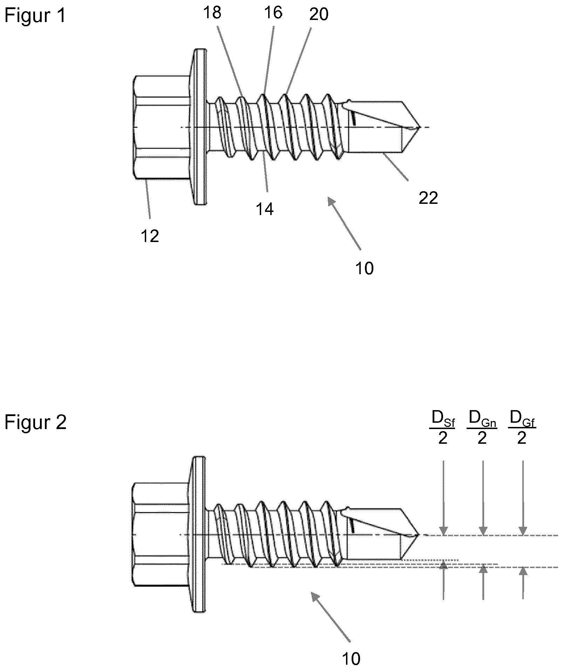

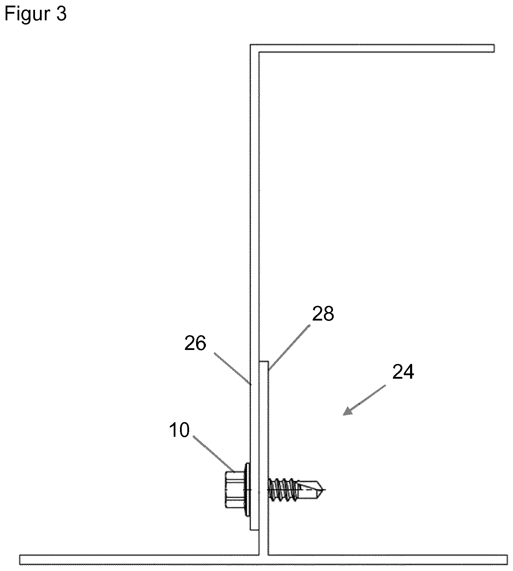

Figur 1 zeigt eine Schraube 10 für eine erfindungsgemäße Befestigungsanordnung 24. Figur 2 zeigt die Schraube 10 gemäß Figur 1 zum Zwecke der Definition von Durchmessern. Figur 3 zeigt eine nicht erfindungsgemäße Befestigungsanordnung 24. Die Schraube 10 hat einen Kopf 12, der einen Kraftangriff zur Verfügung stellt, und einen Schaft 14. Der Schaft 14 trägt ein Gewinde 16, das einen kopfnahen Gewindeabschnitt 18 und einen kopffernen Gewindeabschnitt 20 aufweist, wobei diese beiden Gewindeabschnitte 18, 20 unterschiedlichen Außendurchmesser haben. Der Außendurchmesser D_{Gf} des kopffernen Gewindeabschnittes 20 ist größer als der Außendurchmesser D_{Gn} des kopfnahen Gewindeabschnittes 18. Letzterer ist wiederum größer als der Außendurchmesser D_{Sf} des Schaftes. Die vorliegende Schraube ist ferner mit einer Bohrspitze 22 ausgestattet.

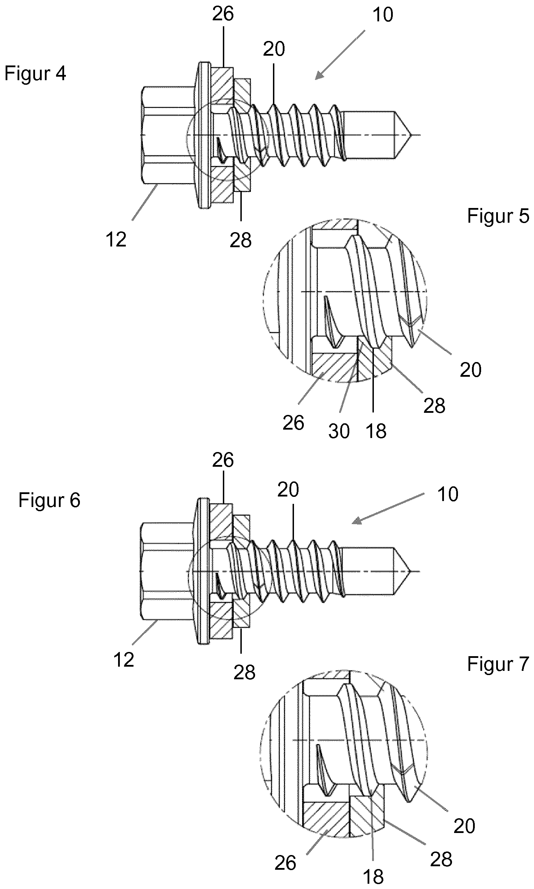

Zur Herstellung einer Befestigungsanordnung 24, wie sie in Figur 3 gezeigt ist, wird ein kopfnahes flächiges Element 26 mit einer Vorbohrung verwendet und ferner ein kopffernes flächiges Element 28 ohne Vorbohrung. Die Schraube 10 wird durch die Vorbohrung des kopfnahen flächigen Elementes 26 geführt, und sie bohrt mit ihrer Bohrspitze ein Loch in das kopfferne flächige Element 28. Nachfolgend tritt das Gewinde 16 mit dem kopffernen Gewindeabschnitt 20 in das kopfferne Element 28 ein, wodurch ein Innengewinde in das kopfferne flächige Element 28 eingebracht wird. Der Vorschub der Schraube 10 erfolgt dann so lange, bis der Kopf 12 der Schraube an dem kopfnahen Element 26 anschlägt. In diesem Moment ist der kopfnahe Gewindeabschnitt 18 bereits in dem kopffernen flächigen Element 28 angeordnet, natürlich nur bei entsprechender Abstimmung der Dicke des kopfnahen flächigen Elementes 26 und der Länge des kopfnahen Gewindeabschnittes 18. Mit dem Anschlagen des Kopfes 12 an dem kopfnahen flächigen Element 26 gibt es nun zwei Varianten, wie die Befestigungsanordnung fertiggestellt wird. Dies wird im Zusammenhang mit den nachfolgenden Figuren 4, 5, 6 und 7 erläutert.

Figur 4 zeigt eine nicht erfindungsgemäße Befestigungsanordnung Figur 5 zeigt eine Einzelheit aus Figur 4. Figur 6 zeigt eine erfindungsgemäße Befestigungsanordnung. Figur 7 zeigt eine Einzelheit aus Figur 6.

In den Figuren 4 und 5 ist der Zustand dargestellt, der dann erreicht ist, wenn der Kopf 12 der Schraube 10 soeben an dem kopfnahen Element 26 angeschlagen hat. Man erkennt ferner, dass der kopfnahe Gewindeabschnitt 18 in dem kopffernen Element 28 liegt, wobei das Außengewinde der Schraube mit dem durch die Schraube eingebrachten Innengewinde in Eingriff steht. Die Elemente 26, 28 werden durch verschiedene Kräfte zusammengehalten. Eine der Kräfte ist die von dem Kopf 12 auf das kopfnahe Element 26 aufgebrachte Kraft. Die Gegenkraft wird durch den kopfnahen Gewindeabschnitt 18 auf das kopfferne Element 28 ausgeübt. Dies wird möglicherweise noch durch eine Kraft des kopffernen Gewindeabschnittes 20, die in dieselbe Richtung wirkt, unterstützt. Man hat in dieser Konfiguration also einen festen Zusammenhalt der Schraube 10 und der Elemente 26, 28 erreicht. Allerdings kann die Schraube 10 aus der Befestigungsanordnung ohne Weiteres wieder herausgedreht werden, oder sie kann sich durch irgendwelche äußere Einflüsse lösen, denn das Innengewinde in dem kopffernen Bauteil 28 ist voll intakt.

Letzteres ist bei dem Zustand, der durch die Figuren 6 und 7 veranschaulicht wird, anders. Hier wurde die Schraube 10 überdreht, so dass das Innengewinde in dem kopffernen Element 28 zerstört ist. Dies ist daran ersichtlich, dass das in Figur 5 vorhandene Material 30 des kopffernen Elementes 28 in Figur 7 nicht mehr vorhanden ist. Die Befestigungsanordnung wird in dieser Situation durch die Haltekraft des Kopfes 12 sowie des kopffernen Gewindeabschnittes 20 aufgebracht. Das überdrehte Gewinde im Bereich des kopfnahen Gewindeabschnittes trägt nichts mehr oder nur noch wenig zur Haltekraft bei. Allerdings liegt nun eine Rückdrehsicherung vor, da das Innengewinde im kopffernen Bauteil 28 zerstört ist.

Die vorliegende Erfindung wurde am Beispiel von zwei miteinander zu verbindenden Bauteilen erläutert. Selbstverständlich können beliebig viele Bauteile bei entsprechender Auslegung der Schraube miteinander verbunden werden. Wesentlich ist nur, dass der kopfnahe Gewindeabschnitt bei fertiger Befestigungsanordnung in dem Bauteil liegt, das den größten Abstand zum Kopf der Schraube hat.

### Bezugszeichenliste

- 10: Schraube
- 12: Kopf
- 14: Schaft
- 16: Gewinde
- 18: kopfnaher Gewindeabschnitt
- 20: kopfferne Gewindeabschnitt
- 22: Bohrspitze
- 24: Befestigungsanordnung
- 26: kopfnahes flächiges Element
- 28: kopffernes flächiges Element
- 30: Material

## Patentansprüche

1. Befestigungsanordnung (24) mit einer Schraube (10), sowie mindestens einem flachen kopfnahen Element (26) und einem flachen kopffernen Element (28), die mittels der Schraube (10) verbunden sind; indem die zwei flachen Elemente (26, 28) unter Beteiligung des Kopfes (12) und des kopffernen Gewindeabschnittes (20) zusammen gehalten werden; wobei die Schraube (10) einen Kopf (12), einen Schaft (14) und ein Gewinde (16) aufweist, wobei das Gewinde (16) zumindest zwei unterschiedliche Gewindeabschnitte (18, 20) aufweist, wobei ein Außendurchmesser D_{Gn} eines kopfnahen Gewindeabschnittes (18) kleiner als ein Außendurchmesser D_{Gf} eines kopffernen Gewindeabschnittes (20) und größer als ein Außendurchmesser D_{Sf} des Schaftes (14) im Bereich des kopffernen Gewindeabschnittes (20) ist, wobei ein kopfseitiges Gewindeende einen Abstand vom Kopf der Schraube aufweist, der geringer ist als eine Gewindesteigung, **dadurch gekennzeichnet, dass** der kopfnahe Gewindeabschnitt (18) in dem kopffernen Element (28) in einem überdrehten Zustand vorliegt und der kopfferne Gewindeabschnitt (20) in einem fertigen Zustand der Befestigungsanordnung (24) außerhalb des flachen kopffernen Elementes (28) angeordnet ist.

2. Befestigungsanordnung (24) nach Anspruch 1, **dadurch gekennzeichnet, dass** in das kopfferne Element (28) durch den kopffernen Gewindeabschnitt (20) der Schraube (10) ein Gewinde eingebracht ist.

3. Verwendung einer Befestigungsanordnung (24) nach einem der vorhergehenden Ansprüche an einer Fassadenunterkonstruktion.

## Claims

1. Fastening arrangement (24) with a screw (10) and at least one flat element (26) near the head and one flat element (28) distant from the head, which are connected by means of the screw (10) with the two flat elements (26, 28) being hold together with the participation of the head (12) and the thread section (20) distant from the head; the screw (10) having a head (12), a shaft (14) and a thread (16), the thread (16) having at least two different thread sections (18, 20), an external diameter D_{Gn} of a thread section near the head (18) being smaller than an external diameter D_{Gf} of a thread section (20) distant from the head and larger than an external diameter Dsf of the shaft (14) in the region of the thread section (20) distant from the head, a head-side thread end being at a distance from the head of the screw which is less than one thread pitch, **characterized in that** the thread section (18) near the head in the element (28) distant from the head is present in an overwound state and the thread section (20) distant from the head is arranged outside the flat element distant from the head (28) in a finished state of the fastening arrangement (24).

2. The fastening arrangement (24) according to claim 1, **characterized in that** a thread is formed in the element (28) distant from the head by the thread section (20) of the screw (10) distant from the head.

3. Use of a fastening arrangement (24) according to any one of the preceding claims on a façade substructure.

## Revendications

1. Système de fixation (24) avec une vis (10) et au moins un élément plat proche de la tête (26) et un élément plat loin de la tête (28), qui sont reliés au moyen de la vis (10), dans lequel les deux éléments plats (26, 28) sont maintenus ensemble grâce à la participation de la tête (12) et de la section filetée loin de la tête (20), sachant que la vis (10) comporte une tête (12), une queue (14) et un filetage (16), sachant que le filetage (16) comporte au moins deux sections filetées (18, 20) différentes, sachant qu'un diamètre extérieur D_{Gn} d'une section filetée proche de la tête (18) est plus petit qu'un diamètre extérieur D_{Gf} d'une section filetée loin de la tête (20) et plus grand qu'un diamètre extérieur D_{Sf} de la queue (14) dans la zone de la section filetée loin de la tête (20), sachant qu'une extrémité de filetage du côté tête comporte une distance de la tête de la vis, qui est plus faible qu'un pas de filetage, **caractérisé en ce que** la section filetée proche de la tête (18) dans l'élément loin de la tête (28) se présente dans un état trop serré et la section filetée loin de la tête (20) est disposée dans un état prêt du système de fixation (24) en dehors de l'élément plat loin de la tête (28).

2. Système de fixation (24) selon la revendication 1, **caractérisé en ce qu'**un filetage est introduit dans l'élément loin de la tête (28) par la section filetée loin de la tête (20) de la vis (10).

3. Utilisation d'un Système de fixation (24) selon l'une quelconque des revendications précédentes sur une ossature de façade.
